# EUROPEAN PATENT APPLICATION

(11) **EP 0 888 987 A1**
(43) Date of publication of application: **07.01.1999**
(21) Application number: 98102920.0
(22) Date of filing: 19.02.1998
(51) Int. Cl.: B65H 1/00, A01K 97/06, B65H 75/06, B65H 75/28

(54) **Winding device**

(30) Priority: 19.02.1997 GB 9703277
(71) Applicant: Watts, Barry, Chalgrove, Oxon OX9 7RW (GB)
(72) Inventor: The designation of the inventor has not yet been filed
(74) Representative: Rock, Olaf Colin

(57) **Abstract**

A storage device (11) comprises a pair of longitudinal and parallel side members (12, 13) connected by at least one cross member (14) to define a storage region (S) for line (L) between and substantially parallel to the side members (12, 13) and is characterised by a rider (26) mounted on one of the side members (13), the rider (26) being slidable along a length of the side member (13) on which it is mounted, the rider (26) being adapted for demountable attachment to one end of a line (L) or an extension thereof stored, or to be stored, on the device (11) in the storage region (12); and an anchorage (22) on the device (11) other than on the rider (26) for the other end of the line (L) or an extension thereof to the one end such that a line (L) stored on the device (11) in the storage region (S) when attached by one end to the anchorage (22) and by its other end to the rider (26) can have the tension in at least a part of the line (L) varied by motion of the rider (26) towards or away from the anchorage (22).

Typically the device is used to store a fishing line, the first end of the line being equipped with a hook wherewith to engage the anchorage (23) and the other end of the line to the first end is provided with a loop wherewith to engage the rider (26).

## Description

### BACKGROUND

This invention relates to a storage device. In particular it is concerned with a storage device for storing thin line such as fishing line.

### TECHNICAL FIELD

A fishing line is normally of substantial length and small cross section and when not in use needs to stored in a way which allows for its ready recovery for use with a fishing rod or reel. Making use of a stored line often occurs in a location and under conditions where ready manipulation of free length of line is not feasible. In the event the line becomes tangled with itself or other lines or objects the recovery of the line for effective use, even if practicable, can be time consuming.

### DISCLOSURE OF THE INVENTION

According to a first aspect of the present invention there is provided a storage device comprising a pair of longitudinal and parallel side members connected by at least one cross member to define a storage region for line between and substantially parallel to the side members characterised by: a rider mounted on one of the side members, the rider being slidable along a length of the side member on which it is mounted, the rider being adapted for demountable attachment to one end of a line (or an extension thereof) stored, or to be stored, on the device in the storage region; and an anchorage on the device other than on the rider for the other end of the line (or an extension thereof) to the one end such that a line stored on the device in the storage region when attached by one end to the anchorage and by its other end on the rider can have the tension in at least a part of the line varied by motion of the rider towards or away from the anchorage.

According to a first preferred version of the first aspect of the present invention the storage device is characterised by a second rider provided on the side member other than that on which the rider is mounted; and a second anchorage on the device other than on the rider or the second rider such that a second line can be stored on the device in the storage region independently of whether or not a first line is stored thereon; the second line being attached by one end to the second anchorage and by its other end on the second rider, the rider being adapted for sliding towards or away from the second anchorage to change tension in at least some of the second stored line.

According to a second aspect of the present invention there is provided a line storage device comprising a storage device according to the first aspect or the first preferred version thereof characterised by a line wound on the device in the storage region the line being engaged by a first end of the line or an extension thereof to the anchorage; and by the other end of the line to the first end or an extension thereof to the rider.

According to a first preferred version of the second aspect of the present invention the line storage device is characterised in that the line is a fishing line and the first end of the line is equipped with a hook engaging the anchorage and the other end of the line to the first end is provided with a loop engaging the rider.

### BRIEF DESCRIPTION OF THE DRAWINGS

An exemplary embodiment of the invention will now be described with reference to the accompanying drawing of a storage device of which:

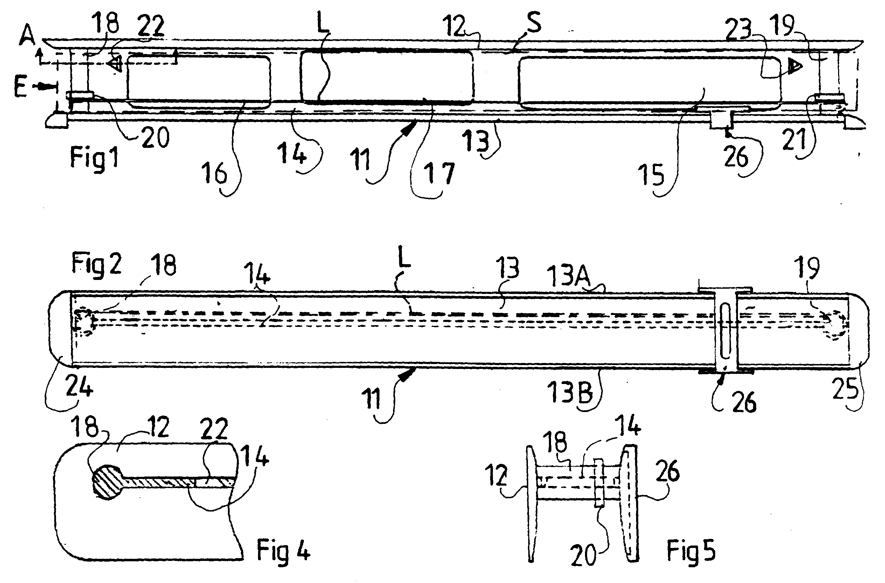

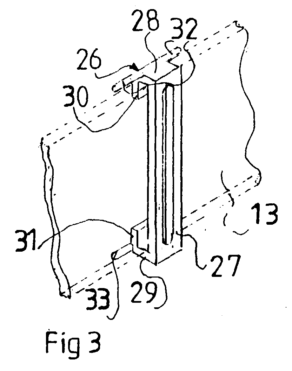

Figure 1 is a view from above;
Figure 2 is a view from the side of Figure 1 in direction of arrow S in Figure 1;
Figure 3 is a enlarged perspective view of a component shown in Figure 1;
Figure 4 is a part section of Figure 1 on section A-A; and
Figure 5 is an end view of Figure 1 in direction of arrow E in Figure 1.

### DESCRIPTION OF AN EXEMPLARY EMBODIMENT

The figures variously show a storage device 11 comprising a pair of parallel side member 12, 13 linked by way of an integral cross web 14. The web 14 contains two substantially rectangular apertures 15, 16 and a central recess 17. The web 14 has two enlarged integral end pieces 18, 19 of substantially circular cross section. The end pieces 18, 19 contain, respectively, an off-centre flange 20, 21. The cross web 14 is pierced at either end by a triangular apertures 22, 23.

Side member 13 has a top edge 13A and bottom edge 13B parallel to top edge 13A.

End pieces 24, 25 of the side member 13 are enlarged relative to the remainder of the side member to retain rider 26 (shown particularly in Figure 3) on the side member 13. The rider 26 has an open work body 27 from which project integral top rider 28 and bottom rider 29. Claws 30, 31 extend from, respectively, riders 28, 29 enabling the rider 26 to be slidably retained on side member 13. The side member 12 incorporates integral end pieces 24, 25 to prevent rider 27 from coming off an end of the side member 12. The rider 27 has horns 32 on top rider 28 and horns 33 on bottom rider 29 serving to anchor a loop at an end of a piece of line L 9of which only a single length is shown) which has already been wound on web 14 and end members 18,19 so as to lie in a storage region (S) formed about the web between the side members 12, 13.

A second rider can be provided on the side member 12 identical in form and function to the rider 26 to provide for the retention of a further line in the storage region S making use of the anchorage 23.

To store fishing line comprising a hook and a length of line on the device 11 the hook is engaged in one or other of the triangular apertures 22, 23. The remainder of the line L is then wound under tension onto the device about web 14 and about end pieces 18, 19 to lie in the storage region as aforesaid. Once the line is almost all wound onto the device a loop formed in the free end of the line is dropped over one of the horns 32 or 33 on rider 26 slidably located on side member 12. By drawing the rider 26 in the appropriate direction along the side member 12 the line is tensioned and thereafter retained under tension. In this state the rider 26 tends to twist slightly relative to the side member 12 so jamming the rider in place and retaining the stored line under slight tension. More than one line can be stored on the device 11 the hook on each line being anchored preferably in one of the triangular apertures 22, 23. The flanges 20, 21 serve to separate one line from another so that a given line occupies a discrete section of the device.

Among other advantages the present invention provides a storage device which provides for the ready storage and tensioning of line while allowing for subsequent easy manipulation of a line stored on the device such as when the line is to be attached to a fishing rod for use.

## Claims

1. A storage device comprising: a pair of longitudinal and parallel side members connected by at least one cross member to define a storage region for line between and substantially parallel to the side members characterised by a rider (26) mounted on one of the side members (13), the rider (26) being slidable along a length of the side member (13) on which it is mounted, the rider (26) being adapted for demountable attachment to one end of a line (1) or an extension thereof stored, or to be stored, on the device (11) in the storage region (S); and an anchorage (22) on the device (11) other than on the rider (26) for the other end of the line (L) or an extension thereof to the one end such that a line stored on the device in the storage region (S) when attached by one end to the anchorage (22) and by its other end to the rider (26) can have the tension in at least a part of the line varied by motion of the rider (26) towards or away from the anchorage22.

2. A storage device as claimed in Claim 1 characterised in that a second rider is provided on the side member (12) other than the side member 13 on which the rider (26) is mounted; and a second anchorage (23) on the device (11) other than on the rider (26) or the second rider such that a second line can be stored on the device (11) in the storage region independently of whether or not a first line (L) is stored thereon; the second line being attached by one end or an extension thereof to the second anchorage (23) and by its other end to the second rider so that the tension in at least a part of the line varied by motion of the second rider towards or away from the second anchorage (23).

3. A line storage device comprising a storage device as claimed in Claim 1 or Claim 2 characterised by a line (L) wound on the device (11) in the storage region (S) the line (L) being engaged by a first end of the line or an extension thereof to the anchorage (22); and by the other end of the line (L) to the first end or an extension thereof to the rider (26).

4. A line storage devices as claimed in Claim 3 characterised in that the line (L) is a fishing line and the first end of the line is equipped with a hook wherewith to engage the anchorage (22) and the other end of the line (L) to the first end is provided with a loop wherewith to engage the rider (26).
